# EUROPÄISCHE PATENTSCHRIFT

(11) **EP 0 735 937 B1**
(45) Veröffentlichungstag und Bekanntmachung des Hinweises auf die Patenterteilung: **24.09.1997**
(21) Anmeldenummer: 95903756.5
(22) Anmeldetag: 21.12.1994
(51) Int. Cl.: B25H 1/08, B25H 1/10, B23Q 1/74

(54) **WERKBANK, INSBESONDERE FÜR SCHWEISS- UND STAHLBAUARBEITEN**
WORK BENCH, IN PARTICULAR FOR WELDING AND STRUCTURAL STEEL WORK
ETABLI, NOTAMMENT POUR TRAVAUX DE SOUDAGE ET DE CONSTRUCTION DE STRUCTURES EN ACIER

(30) Priorität: 22.12.1993 DE 4343918
(43) Veröffentlichungstag der Anmeldung: 09.10.1996
(73) Patentinhaber: Hoffmann, Gerhard, D-79541 Lörrach (DE)
(72) Erfinder: Hoffmann, Gerhard, D-79541 Lörrach (DE)
(74) Vertreter: Allgeier, Kurt
(86) Internationale Anmeldenummer: DE9401514
(87) Internationale Veröffentlichungsnummer: WO9517282

(56) Entgegenhaltungen:
- DE-A- 2 700 495
- US-A- 1 777 789
- US-A- 2 913 022

## Beschreibung

Die Erfindung bezieht sich auf eine Werkbank, inbesondere für Schweiss- und Stahlbauarbeiten, mit einem Rahmengestell, bestehend aus wenigstens vier Beinen und wenigstens je zwei Quertraversen und Längsholmen oder -flanschen, welch letztere in Längsrichtung mindestens eine Führungsnut aufweisen und von denen einer auf den Quertraversen fest montiert, der andere parallel verschiebbar ist.

Eine derartige Werkbank ist aus der DE-A-2 700 495 bekannt.

Bei bekannten Werkbänken wird es bei der Ausführung von Schweissarbeiten vor allem zur Herstellung von Stahlbauteilen in Einzelanfertigung als Mangel empfunden, dass die durch Schweissnähte zu verbindenden Teile bzw. Komponenten meist sehr umständlich mit Hilfe von provisorisch zusammengestellten Hilfsgeräten in ihren gewünschten bzw. vorgesehenen Stellungen zueinander festgelegt werden müssen.

Die in Schlosserei und Stahlbau zur Fertigung von Gegenständen und Geräten üblicherweise eingesetzten, einfachen Schweiss- und Arbeitsbänke bestehen meist aus einfachen Stahlrohrböcken. Um eine solche Bank nach Bedarf zu verlängern oder zu verbreitern, werden Stahlträger aufgelegt und den Erfordernissen entsprechend von Hand verschoben. Bei einseitiger Belastung der Böcke und Träger kann ein Umkippen der Bank nicht mit Sicherheit vermieden werden. Je nach Beschaffenheit der Werkstattböden ist ausserdem ein zeitaufwendiges Ausrichten der Teile nach jedem Verschieben notwendig.

Auf den Trägern werden dann in herkömmlicher Schweiss- und Arbeitstechnik Geräte und Konstruktionen hergestellt. Dazu werden z. T. Hilfswinkel und Anschläge auf den Träger angeschweisst, die nach der Fertigstellung der Arbeit wieder mit Hammer, Meissel und Schleifgeräten entfernt werden müssen. Selbst um nur einfache Teile oder Konstruktionen massgerecht und wirtschaftlich herstellen zu können, sind gerade diese vor- und nachbereitenden Arbeiten nur von geübten Fachkräften zu erbringen.

Durch die DE-C-19 10 977 wurde eine Spannvorrichtung für eine Werkbank bekannt, bei der auf einem Unterbau beidseitig quer verlaufende Tragholme befestigt sind, auf denen in Längsrichtung verlaufende Klemmbacken angeordnet sind, von denen einer fest montiert, der andere auf den Tragholmen verschiebbar ist. Um zwischen den Klemmbacken auch Gegenstände sicher einspannen zu können, die nicht rechtwinklig ausgebildet sind, sondern sich im Gegenteil verhältnismässig stark verjüngen, ist innerhalb beider Tragholme jeweils ein Spindelantrieb vorgesehen, über die der verschiebbare Klemmbacken auf den Tragholmen, von darauf angebrachten Führungsteilen geführt, transversal bewegt werden kann. Da die beiden Spindelantriebe unabhängig voneinander über je eine Handkurbel zu betätigen sind und der Eingriff der Spindelantriebe in die Führungsteile ein ausreichendes Spiel aufweist, lässt sich durch die Betätigung nur eines der Spindelantriebe der verschiebbare Klemmbacken in eine Winkelstellung zum feststehenden Klemmbacken bringen, so dass durch entsprechende, unabhängige Betätigung der Spindelantriebe auch Gegenstände mit sich einseitig verjüngender Form eingespannt werden können. Zur Parallelverschiebung des verschiebbaren Klemmbackens müssen beide Spindelantriebe gleichzeitig und gleichmässig betätigt werden. Die planen Oberflächen der Klemmbacken bilden gemeinsam eine Arbeitsfläche.

Die Einsatzmöglichkeit dieser Spannvorrichtung bleibt jedoch verhältnismässig begrenzt, insbesondere sind keine Möglichkeiten vorgesehen, irgendwelche Hilfsmittel, wie Winkel, Anschläge und dergleichen, mit wenigen Handgriffen anbringen und wieder lösen zu können. Auch eine bedarfsweise Vergrösserung der Arbeitsfläche ist nicht vorgesehen.

Die DE-A-27 00 495 offenbart eine Werkbank mit zwei einen Schraubstock bildenden Spannbacken, die auf zwei Querträgern geführt, mittels zweier unabhängig voneinander betätigbarer Kurbelantriebe aufeinander zu oder voneinander weg parallel verschoben werden können. Beide Spannbacken weisen mindestens eine sich über ihre gesamte Länge erstreckende Nut auf. In dieser Nut können Hilfsmittel längsverschieblich angeordnet und an jeder beliebigen Stelle festgeklemmt werden.

Aufgabe der vorliegenden Erfindung ist es, eine Werkbank der eingangs genannten Art zu schaffen, deren Einsatzmöglichkeit möglichst universell ist und auf der sich neben Werkstücken kleiner oder mittlerer Grösse insbesondere auch grosse Teile, z.B. Podest- und Treppengeländer, bearbeiten lassen, wobei also die Werkbank gerade auch an grosse Abmessungen anpassbar ist. Hilfsmittel, wie Anschläge, Winkel, Klemmvorrichtungen u. dergl. sollen griffbereit und schnell und kontinuierlich verstellbar sein. An der erfindungsgemässen Werkbank sollen auch weniger geübte Fachkräfte, eventuell auch angelernte Hilfskräfte rationell u.a. massgenaue Konstruktionsteile, Gerätschaften unterschiedlichster Art und eben auch verschiedene Geländer herstellen können.

Erfindungsgemäss wird dies bei einer Werkbank der eingangs genannten Art dadurch erreicht, dass wenigstens eine mit dem Rahmengestell oder einem der Längsflansche starr verbundene, parallel zu einem der Längsflansche verlaufende Führungsstange mit prismenartigem Querschnitt vorgesehen ist, an welcher wenigstens ein längsverschiebbar geführter, mit Befestigungs- und Spannelementen zur Halterung von Werkzeugen, Anschlägen oder dergl. Hilfsgeräten bestückbarer Support mit oder ohne motorischen Antrieb längsverschiebbar geführt ist, und dass die Auflagefläche für auf der von den Oberseiten der beiden Längsflansche gebildeten Arbeitsfläche zu bearbeitenden Werkstücke durch einschieb- und ausziehbare und/oder lösbar ansetzbare Teile erweiterbar ist.

Jeder an der Führungsstange längsverschiebbare Support ist erfindungsgemäss mit wenigstens einer nach oben offenen C-Profilstange zur Aufnahme von Kopfschrauben oder -bolzen und mit einer nach innen gerichteten Anschlagfläche sowie mit einer waagrechten und einer senkrechten Aufspannfläche versehen, die Gewindebohrungen zum Einschrauben von Klemmschrauben aufweisen.

In besonders vorteilhafter Weise kann der Support mit einoder beidendig der senkrechten Aufspannflächen angebrachten Augen versehen sein, an welchen mittels in waagrechter Achse verlaufenden Bohrungen bzw. Gewindebohrungen auf Bolzen gelagerte, in vertikaler Ebene bewegliche, als Endanschläge oder Halterungen benutzbare, prismenartige Stangen anbringbar sind.

Weitergehende Spann- und Bearbeitungsmöglichkeiten werden dadurch geschaffen, dass an jeder prismenartigen Stange teleskopartig längsverschiebbar oder mittels eines Gelenks um eine vertikale Achse schwenkbar ein Montagearm befestigt ist, der mit Festspann- und Klemmvorrichtungen für Werkstücke versehen ist, welche in der jeweils gewünschten und mittels einer Feststellvorrichtung fixierbaren Stellung des Montagearms einsetzbar sind. Eine weitere Verbesserung ist dadurch möglich, dass am Montagearm ein C-förmiges Profilstück befestigt ist, in dessen T-förmmiger Nut Kopfschrauben oder Bolzen verschiebbar und fixierbar sind, welche zum Anschrauben von Spann- oder Befestigungsmitteln dienen, und ferner dadurch, dass mittels Kopfschrauben ein Winkel- oder T-Profilstück mit dem C-förmigen Profilstück in einer vorgewählten Position verschraubt ist.

Diesen Vorrichtungen können weitere Montagemöglichkeiten zusätzlich dadurch erschlossen werden, dass das Winkel- oder T-Profilstück mit den Trägerflanschen des Doppel-T-Trägers des ersten Längsflansches mittels Verschraubungen verbindbar ist, deren Schraubenköpfe in der Nut zwischen den beiden Trägerflanschen ihr Widerlager finden.

Durch die oben beschriebenen Massnahmen werden die Ein-spann- und Befestigungsmöglichkeiten für zu bearbeitende Werkstücke und ebenso für Werkzeuge und verschiedenartige Hilfsmittel gegenüber dem Stand der Technik ausserordentlich verbessert und erweitert. Es ergeben sich die unterschiedlichsten Variationsmöglichkeiten, weil die Möglichkeit zum Einspannen oder Befestigen nicht nur in den Längsnuten der Längsflansche besteht, sondern auch in den Nuten und an den Spannflächen der längsverschiebbaren Supporte und der daran befestigbaren, also mitverschiebbaren und winklig verstellbaren Montagearmen.

Damit können auch zum Ausrichten und Spannen komplizierterer räumlicher Gebilde durch Ausnutzen dieser universellen Befestigungs- und Spannmöglichkeiten Hilfsmittel wie Anschläge, Anlagewinkel in Verbindung mit Spannzwingen mitbenutzt werden.

Es können so Werkzeuge und Hilfsgeräte, wie Anschläge, Klemmvorrichtungen und dergleichen in unterschiedlichster Konstellation angeordnet werden, so dass auch unter Nutzung der an den Supporten und Montagearmen bereits vorgesehenen Anschlagflächen unterschiedlichste Werkstücke, auch mehrteilige oder räumliche Gebilde in richtiger Lage-Kombination für die Bearbeitung festgehalten bzw. festgespannt werden können. Die Halterung der Teile kann dabei mechanisch oder auch magnetisch erfolgen.

An einer so erfindungsgemäss ausgestalteten Werkbank lassen sich schnell maßgenaue Lehren und Schablonen herstellen und es können auch weniger geübte Fachkräfte, eventuell angelernte Hilfskräfte mit Schweisskenntnissen rationell u.a. massgenaue Konstruktionsteile, Gerätschaften oder auch Podest- und Treppengeländer herstellen.

Gemäss einer besonders vorteilhaften Ausführungsform der Erfindung besteht jeder Längsflansch aus zwei parallel zueinander angeordneten Doppel-T-Trägern, deren waagrechtliegende Trägerflansche voneinander um einen Betrag, der um ein geringes grösser ist als der Durchmesser eines Gewindebolzens beabstandet sind.

Vorteilhafterweise ist in dem von den Doppel-T-Trägern nahezu umschlossenen Raum ein Vierkantrohr mittig auf die auf den Quertraversen aufliegenden Trägerflansche der Doppel-T-Träger aufgeschweisst, das als Schieberführungshülse für eine innen geführte Vierkantstange dient.

In vorteilhafter Weiterbildung der Erfindung sind ein- oder beidseitig in den Vierkantrohren beider Längsflansche Vierkantstangen längsverschieblich geführt, wobei an deren aus den Längsflanschen herausragenden Enden Quer-Auflageflächen angebracht werden können. So lässt sich bei Bedarf die Auflagelänge für langgestreckte Werkstücke durch ausziehen der Vierkantstangen auf einer oder beiden Seiten stark vergrössern. Wird die vergrösserte Auflagefläche nicht mehr benötigt, können die Vierkantstangen einfach wieder in die Vierkantrohre der Längsflansche eingeschoben werden.

Eine weitere Möglichkeit zum Festspannen von Werkstücken kann dadurch geschaffen werden, dass ein- oder beidseitig in dem U-förmigen, von den Trägerflanschen und den Trägerstegen gebildeten Räumen C-förmige Profilstangen eingeschweisst sind. In diese C-förmigen Profilstangen können Kopfbolzen, Spannanker oder dergleichen Spannzeuge eingesetzt und dadurch weitere Befestigungsmöglichkeiten für komplizierte Werkstücke geschaffen werden.

Zur besseren Parallelführung des zweiten - verschiebbaren - Längsflansches, welcher auf den Quertraversen aufliegt, kann vorgesehen sein, dass er durch Gleit- oder Wälzführungsmittel formschlüssig in Nuten geführt ist, welche in den Quertraversen angebracht sind.

Die Auflagemöglichkeit für besonders grosse zu bearbeitende Werkstücke kann nach der Erfindung nochmals erweitert werden. Dazu schliessen vorteilhafterweise die Quertraversen bündig mit den Aussenseiten der Beine der Werkbank ab und es kann an den Aussenseiten der Beine je ein rechtwinkliges Winkelteil lösbar angebracht werden, dessen freier Winkelschenkel die Quertraverse samt Führungsnut fortsetzt. d.h. verlängert.

Die Winkelschenkel können entweder starr im rechten Winkel oder um eine Achse (a) um 90° schwenkbar miteinander verbunden sein.

Im letzteren Fall kann der freie Winkelschenkel zum am Bein befestigten Winkelschenkel bedarfsweise im rechten Winkel festgestellt oder um 90° nach unten weggeklappt werden. Das hat den Vorteil, dass das Winkelteil nicht jedesmal, wenn es benötigt wird, an- und wieder abgeschraubt werden muss, sondern auch wenn seine Verlängerung nicht gebraucht wird, ohne zu stören am Bein montiert bleiben kann.

Es ist besonders vorteilhaft, wenn an den seitlichen Innenflächen der Längsflansche und/oder der die Quertraversen fortsetzenden Winkelschenkel eine Masseinteilung vorgesehen ist.

Um die Parallelverschiebung des zweiten Längsflansches gegenüber dem ersten, feststehenden Längsflansch handhabungsmässig zu erleichtern kann dieser mit einem beidendig wirkenden Antrieb versehen sein, der darin besteht, dass beidendig am Rahmengestell im Bereich der Beine parallel zu den Quertraversen verlaufend Querstangen befestigt sind, und dass der auf den Quertraversen aufliegende in Querrichtung und parallel zu dem feststehenden, ersten Längsflansch verschiebbare, zweite Längsflansch beidendig mit wenigstens einer einen Auflagedruck auf die Querstangen ausübenden Treibrolle versehen ist, die beide auf einer beidendig unterhalb des Längsflansches an diesem drehbar gelagerten und mit einem Handrad ausgerüsteten Königswelle befestigt sind. Ein formschlüssig wirkender Antrieb kann z.B. dadurch geschaffen werden, dass die Querstangen Zahnstangen sind und die Treibrollen in diese eingreifende Verzahnungen aufweisen.

Eine abgewandelte Lösung für das Problem des Parallelantriebs der Verschiebebewegung für den zweiten, beweglichen Längsflansch kann auch noch darin bestehen, dass beidendig im Bereich des Rahmengestells und parallel zu den Quertraversen verlaufend Gewindespindeln drehbar gelagert und von Hand oder motorisch antreibbar sind, welche in Gewindemuttern eingreifen, die an einem der verschiebbaren Längsflansche befestigt sind.

Nach einem zusätzlichen Merkmal kann es vorteilhaft sein, wenn die vertikalen Anschlagflächen und/oder die vertikalen Flächenteile der Montagearme mit in Aufnahmenuten eingesetzten und befestigten Permanent-oder Elektromagneten versehen sind. Dadurch kann das Vorbereiten der Werkstücke oder Werkstück-Komponenten durch Einrichten der jeweiligen Lage zum Festspannen vor dem Bearbeiten oder Schweissen erleichtert und damit verbessert werden.

Weitere Ausgestaltungsmerkmale können der beigefügten Zeichnung entnommen werden, in welcher Ausführungsbeispiele dargestellt sind, die im folgenden näher erläutert werden. Es zeigen
- Fig. 1: eine perspektivische Darstellung der Werkbank,
- Fig. 2: eine perspektivische Teilansicht gem. Fig. 1,
- Fig. 3: eine Seitenansicht gem. Fig. 1,
- Fig. 4: eine Einzelheit bei "A" gem. Fig. 1,
- Fig. 5: eine Einzelheit bei "B" gem. Fig. 1 im Schnitt,
- Fig. 5a: die Abwandlung einer Einzelheit gem. Fig. 5,
- Fig. 6: eine Einzelheit "C" gem. Fig. 2,
- Fig. 7: Ausschnitte aus der Darstellung gem. Fig. 1 mit einer abgewandelten Verstellung des zweiten Längsflansches,
- Fig. 8: Ausschnitte aus einer zweckmässigen Weiterbildung der Werkbank gemäss Fig. 1.

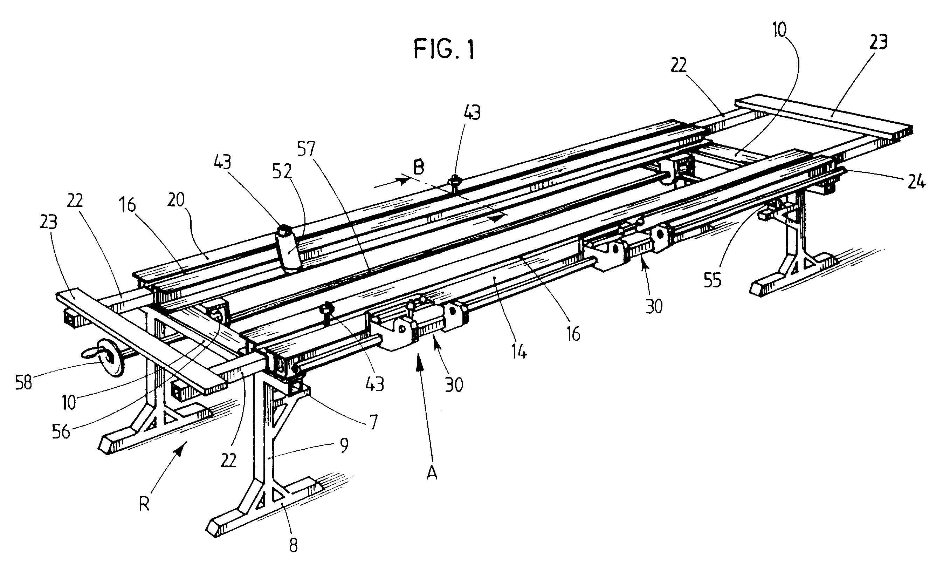

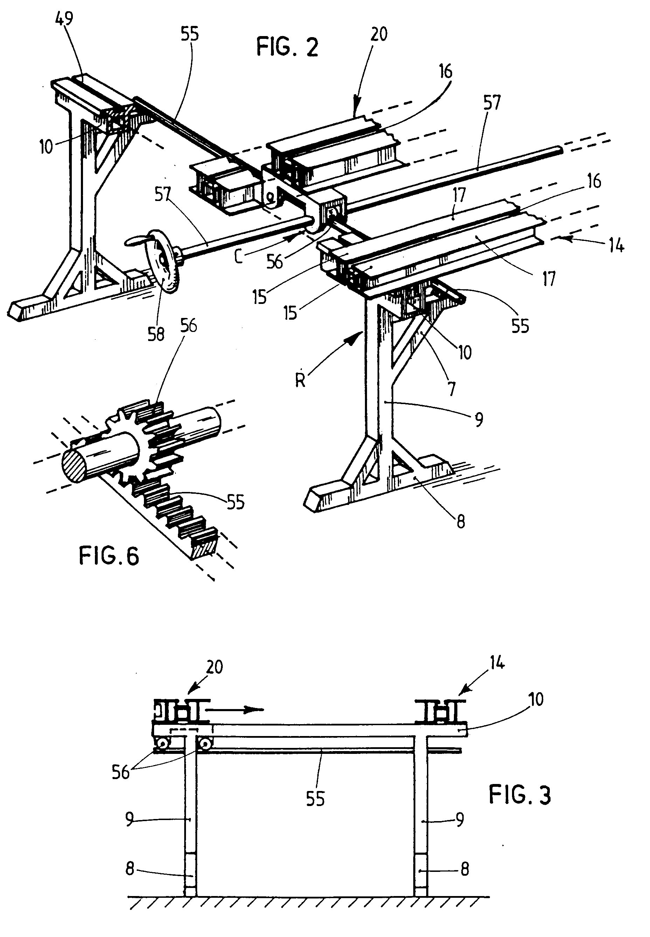

In den Fig. 1 und 2 sind das Rahmengestell mit R, die Beine mit 9, die Fusstege mit 8 und die Halterungen für die Lagerung der Querstangen 55 mit 7 bezeichnet. Die Beine 9 sind durch die Quertraversen 10 verbunden.

Die beiden Rahmen R sind ferner durch den feststehenden Längsflansch 14 verbunden. Parallel zu dem feststehenden Längsflansch 14 ist der bewegliche zweite Längsflansch 20 querverschiebbar; in seiner jeweiligen Lage kann er mit Knebelschrauben oder auch mit Luftdruck-Zylindern arretiert werden. Er liegt auf den feststehenden Quertraversen 10 auf, welche Nuten 49 aufweisen, in denen mittels Gleit- oder Wälzführungsmitteln, im dargestellten Ausführungsbeispiel sind es Gleitsteine, der zweite Längsflansch 20 geführt ist.

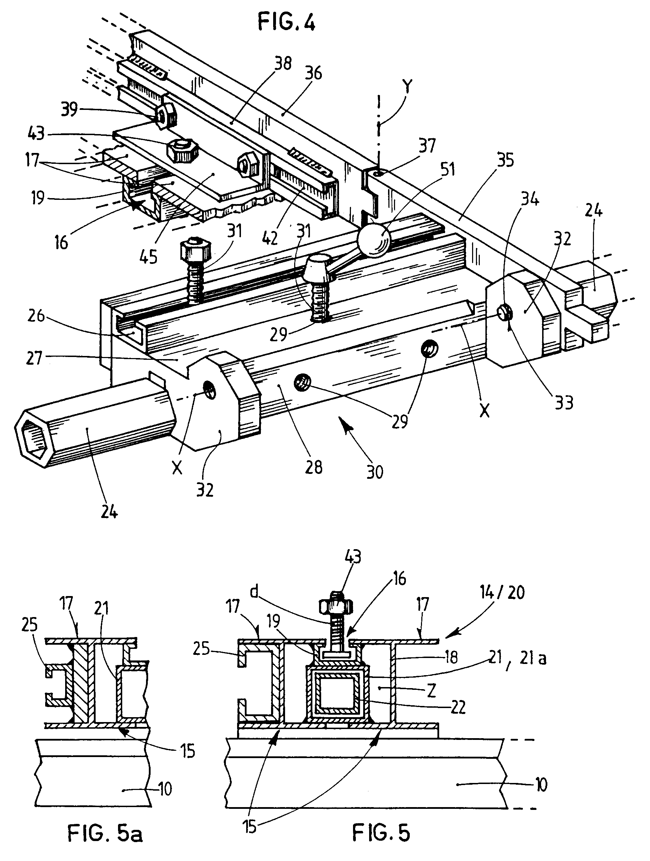

Fig. 3 zeigt schematisch eine Seitenansicht der Werkbank gemäss Fig. 1. Zu sehen sind die Beine 9 mit den Fusstegen 8 und die Quertraverse 10, auf deren einer Seite der fest montierte Längsflansch 14 und auf deren anderer Seite der parallel verschiebbare Längsflansch 20 dargestellt ist; letzterer ist mit Hilfe von Wälzlagern 56, beispielsweise Rollen, auf einer Querstange 55 in Verschieberichtung geführt. Die Ausbildungsweise der Längsflansche 14 und 20 ist aus Fig. 5 näher ersichtlich. Sie bestehen aus zwei um ein geringes, eine Nut 16 bildendes Mass beabstandete und mittels des Vierkantrohres 21 einseitig verschweissten DoppelT-Trägern 15. Im Ausführungsbeispiel ist ein U-förmiges Bodenblech 19 unter die beiden oberen Trägerflansche 17 geschweisst. Der Raum zwischen den Trägerstegen 18 ist mit Z bezeichnet. Das Vierkantrohr 21 dient als Schieberführungshülse 21a für eine innengeführte Vierkantstange 22. In der durch das Bodenblech 19 und die Trägerflansche 17 bestimmten Nut 16 sind Schrauben 43 mit ihren Schraubenköpfen verschiebbar gehalten, die zusammen mit je einer Kontermutter der Halterung von Hilfsmitteln dienen. Die Nut 16 muss also um ein geringes weiter sein als der Durchmesser d des Gewindebolzens. Ausserdem ist aus Fig. 5 noch zu ersehen, dass auf wenigstens einer Aussenseite der Längsflansche 14 oder 20 in den U-förmigen von den Trägerflanschen 17 und den Trägerstegen 18 gebildeten Raum eine C-förmige Profilstange 25 eingeschweisst sein kann.

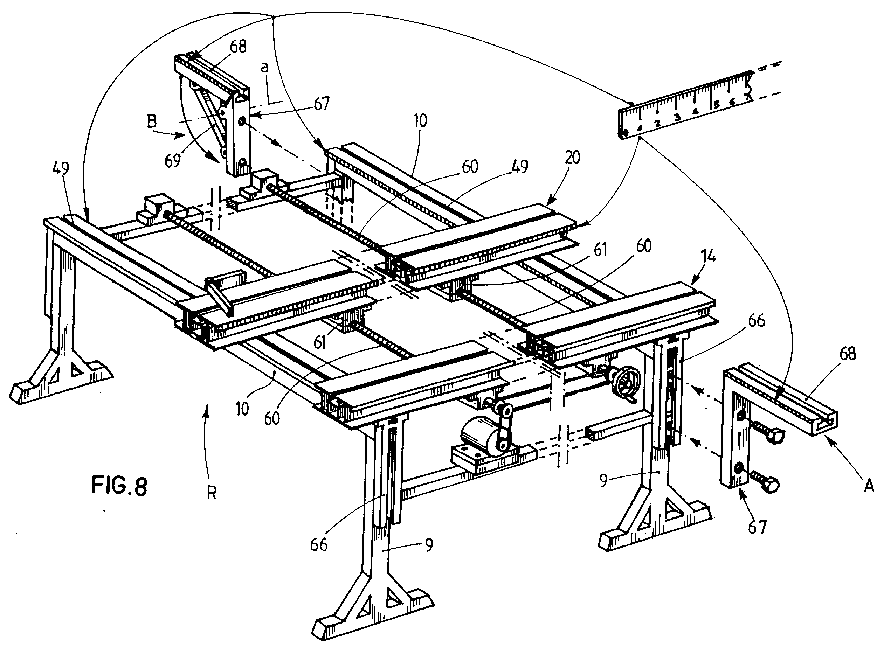

Diese C-förmige Profilstange 25 kann gemäss Fig. 5 den gesamten seitlichen U-förmigen Raum des T-Trägers 15 ausfüllen, aber bei Bedarf gemäss Fig. 5a auch deutlich kleiner ausgebildet sein. In jedem Fall dient die Profilstange 25 dem Einspannen von Werkzeugen oder Hilfsmitteln, z. B. eines Anschlagwinkels 70 gemäss Fig. 8.

Wie aus Fig. 1 ersichtlich ragen an beiden Enden beider Längsflansche 14, 20 Vierkantstangen 22 heraus, die in den die Doppel-T-Träger 15 der Längsflansche 14, 20 bodenseitig verbindenden Vierkantrohren 21 (vgl. Fig. 5) geführt sind und auf die Quer-Auflageflächen 23 aufgelegt werden können.

Die Vierkantstangen 22 sind daher einschieb- und ausziehbar und dienen in ausgezogenem Zustand ev. zusammmen mit den Auflageflächen 23 der Verlängerung der Auflagemöglichkeit für sehr lange Werkstücke oder auch als Ablage für Werkzeuge oder Werkstücke.

Beispielhaft ist in Fig. 1 auch dargestellt, wie ein winklig verstellbarer Anschlag 52 in der Nut 16 des verschiebbaren Trägerflansches 20 mit Hilfe einer Verschraubung 43 (Schraube mit Kontermutter) in Längsrichtung verschiebbar und feststellbar ist.

An der Vorderseite, d.h. Bedienungsseite der Werkbank ist die Führungsstange 24 von prismenartigem Querschnitt befestigt, welche zur Führung der längsverschiebbaren Supporte 30 dient. Diese sind, wie deutlicher in Fig. 4 zu erkennen ist, mit einer nach oben offenen C-Profilstange 26 sowie waagrechten und senkrechten Aufspannflächen 27, 28 versehen, welche Gewindebohrungen 29 zum Einschrauben von Klemmschrauben 31 aufweisen. Ausserdem haben sie beidseitig jeweils ein angeformtes Auge 32. Diese Augen 32 sind mit Gewindebohrungen 33 versehen, welche in waagrechten Achsen "X" verlaufen. Auch diese können zum Einschrauben von Befestigungssschrauben für Werkstückteile dienen. Mit Hilfe der einen vorzugsweise durch einen Knebel 51 betätigbaren Klemmschraube 31 lässt sich der Support 30 auf der Führungsstange 24 feststellen. Die Führung des Supports 30 auf der Führungsstage 24 ist infolge deren prismenartigen Querschnitts leicht und sicher.

Auf jeder der beiden Seiten eines solchen Supports 30 kann in eingeschraubten Bolzen 34 eine in vertikaler Ebene bewegliche prismenartige Stange 35 gelagert sein. Im Ausführungsbeispiel ist auf der rechten Seite nur eine dieser in vertikaler Richtung schwenkbare prismenartige Stange 35 dargestellt, die in der erwähnten Weise mittels des in eine Bohrung 33 eingeschraubten Bolzens 34 gelagert ist; sie kann als Endanschlag oder als Halterung benutzt werden.

An dieser prismenartigen Stange 35 ist in einem um eine vertikale Achse y beweglichen Gelenk 37 ein Montagearm 36 gelagert, der an seiner einen Seitenfläche ein C-förmiges Profilstück 38 trägt, in dessen T-förmiger Nut 42 Kopfschrauben 39 eingesetzt sind, mit denen ein Winkelstück 45 mit Hilfe von Muttern angeschraubt ist. Es können selbstverständlich auch beliebige andere Teile oder Vorrichtungen bzw. Werkstückkomponenten an dem Profilstück 38 und in dessen Nut 42 verschiebbar und in beliebiger Position feststellbar angeschraubt werden.

Im Ausführungsbeispiel ist das Winkelstück 45 mit den Trägerflanschen 17 der Doppel-T-Träger 15 des ersten Längsflansches 14 mittels der Verschraubungen 43 verbunden, deren Schraubenköpfe in der Nut 16 zwischen den beiden Trägerflanschen 17 ihr Widerlager finden (siehe dazu auch Fig. 5). Der Montagearm 36 kann in beliebiger Winkelstellung am Trägerflansch 17 befestigt werden; zweckmässigerweise ist eine Gradeinteilung vorgesehen.

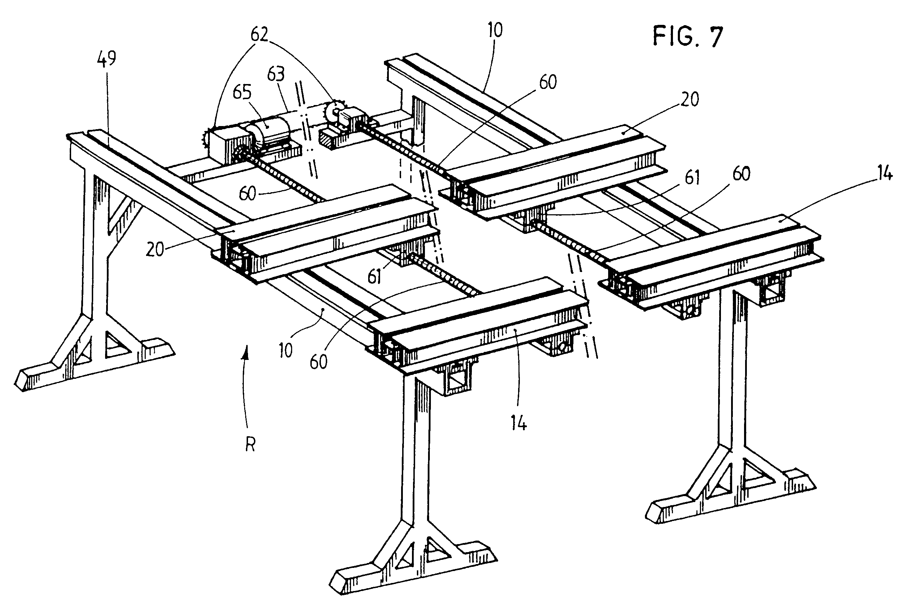

Die Verstellung bzw. Verschiebung des zweiten beweglichen Längsflansches 20 kann von Hand erfolgen. In seiner jeweiligen Stellung kann der Längsflansch 20 mittels nicht näher dargestellter Spannmittel festgespannt werden. Wenn die Werkbank verhältnismässig lang ist, kann das Verstellen von Hand wegen der Gefahr des Verkantens schwierig sein. Daher sind im Bereich der Beine 9 parallel zu den Quertraversen 10 verlaufend Querstangen 55 befestigt, und der Längsflansch 20 ist mit jeweils zwei diesen Querstangen 55 zugewandt gelagerten Treibrollen 56 versehen, durch welche auf die Querstangen 55 ein gewisser Auflagedruck ausgeübt wird (siehe Fig. 1 bis 3). Eine der Treibrollen 56 auf jeder Seite sitzt auf der Königswelle 57, an welcher ein Handrad 58 befestigt ist. Durch Drehen des Handrades 58 wird auf jeder Seite eine Treibrolle 56 angetrieben, und die Treibrollen 56 rollen auf den Querstangen 55 ab, insbesondere wenn die Treibrollen 56 und die Querstangen 55 in nicht besonders dargestellter Weise mit Aufrauhungen versehen sind. Anstelle der beiden Treibrollenpaare 56 können Zahnräder zur Anwendung kommen, die sich dann auf Zahnstangen 55 abwälzen, wie dies in Fig. 6 dargestellt ist.

Ferner können anstatt der Querstangen (oder Zahnstangen) 55 auch drehbar gelagerte, in Querrrichtung verlaufende Gewindespindeln 60 angeordnet sein, wie aus Fig. 7 ersichtlich ist. Der zweite Längsflansch 20 ist dazu beidseitig mit Gewindemuttern 61 bestückt, in welche die Gewindespindeln 60 eingreifen. Die beiden Gewindespindeln 60 sind mit Kettenrädern 62 versehen, die mittels einer endlosen Laschenkette 63 und mittels eines Kettentriebs entweder von Hand mit Hilfe einer Kurbel oder durch einen Antriebsmotor 65 angetrieben werden können.

Um ein Abheben des beweglichen Längsflansches - oder in besonderen Fällen das Einsetzen eines zweiten beweglichen Längsflansches - zu ermöglichen, können die Gewindemuttern 61 zweiteilig als Halbschalen ausgebildet und öffenbar sein.

In Fig. 8 ist eine weitere Form der Vergrösserung der Auflagemöglichkeit für grosse, zu bearbeitende Werkstücke dargestellt, die allein oder auch zusätzlich zu den gemäss Fig. 1 in den Längsflanschen 14, 20 einschieb- und ausziehbaren Vierkantstangen 22 mit Auflageflächen 23 zur Anwendung kommen kann, und zwar durch Verlängerung der Quertraversen 10 an ihren einen oder beiden Enden. Gemäss Fig. 8 schliessen die Quertraversen 10 mit den Aussenflächen der Beine 9 bündig ab, und eine Profilschiene 66 mit vorzugsweise C-förmigen Querschnitt ist gegen die Aussenfläche jedes Beines 9 und das darauf aufliegende Ende der Quertraverse 10 montiert. Gegen diese Profilschienen 66 kann jeweils ein rechtwinkliges Winkelteil 67 geschraubt werden, dessen einer Schenkel 68 in montiertem Zustand die Quertraverse 10 einschliesslich deren Nut 49 fortsetzt und dazu ein C-förmiges Profil aufweist.

Wie aus Fig. 8 zu ersehen ist, kann das Winkelteil 67 unterschiedlich ausgebildet sein. Das Winkelteil 67 bei A ist als starrer rechter Winkel ausgebildet. Es wird zur Verlängerung der Quertraverse 10 gegen die Profilschiene 66 geschraubt und, wenn es nicht mehr benötigt wird oder sogar störend sein könnte, muss es wieder abgeschraubt werden.

Bei B ist deshalb ein Winkelteil 67 dargestellt, das an der Profilschiene 66 befestigt bleiben kann, auch wenn die Verlängerung nicht benötigt wird. Dazu ist der die Quertraverse 10 verlängernde Winkelschenkel 68 um eine Achse a mit dem an der Profilschiene 66 befestigbaren, vorzugsweise anschraubbaren Schenkel verbunden. So kann das Winkelteil 67 fest montiert bleiben und der Winkelschenkel 68 bedarfsweise im rechten Winkel ausgeklappt und vorzugsweise durch eine ebenfalls schwenkbare Strebe 69 in dieser Stellung gesichert werden oder parallel zum verschraubten Schenkel nach unten geklappt werden.

In Fig. 8 ist ausserdem dargestellt, dass an Seitenflächen, vorzugsweise Innenflächen der Quertraversen 10, der diese verlängernden Winkelschenkel 68, und der Längsflansche 14, 20 Masseinteilungen vorgesehen sein können. Der verschiebbare Längsflansch 20 wird wahlweise durch einen Motor 65 oder ein Handrad 58 über ein Kettengetriebe und Gewindespindeln 60 bewegt, wobei die Verschiebung mit dem Handrad 58 vorzugsweise der Feineinstellung dient.

Es besteht die Möglichkeit, an geeigneter Stelle der Werkbank vorzugsweise verstellbare Ablageflächen für Werkzeuge oder eine Schweiss-Probierschiene anzubringen, um Schweissproben auf der Arbeitsfläche zu vermeiden.

## Patentansprüche

1. Werkbank, insbesondere für Schweiss- und Stahlbauarbeiten, mit einem Rahmengestell (R), bestehend aus wenigstens vier Beinen (9) und wenigstens je zwei Quertraversen (10) und Längsflanschen (14, 20), welch letztere in Längsrichtung mindestens eine Führungsnut (16) aufweisen und von denen einer auf den Quertraversen fest montiert, der andere parallel verschiebbar ist,
dadurch gekennzeichnet,
dass wenigstens eine mit dem Rahmengestell (R) oder einem der Längsflansche (14, 20) starr verbundene, parallel zu einem der Längsflansche (14, 20) verlaufende Führungsstange (24) mit prismenartigem Querschnitt vorgesehen ist, an welcher wenigstens ein längsverschiebbar geführter, mit Befestigungs- und Spannelementen zur Halterung von Werkzeugen. Anschlägen oder dergl. Hilfsgeräten bestückbarer Support (30) mit oder ohne motorischen Antrieb längsverschiebbar geführt ist, und dass die Auflagefläche für auf der von den Oberseiten der beiden Längsflansche (14, 20) gebildeten Arbeitsfläche zu bearbeitende Werkstücke durch einschieb- und ausziehbare und/oder lösbar ansetzbare Teile (22, 23, 67) erweiterbar ist.

2. Werkbank nach Anspruch 1, dadurch gekennzeichnet, dass jeder an der Führungsstange (24) längsverschiebbare Support (30) mit wenigstens einer nach oben offenen C-Profilstange (26) zur Aufnahme von Kopfschrauben oder -bolzen (31) und mit einer nach innen gerichteten Anschlagfläche (47) sowie mit einer waagrechten und einer senkrechten Aufspannfläche (27, 28) versehen ist, die Gewindebohrungen (29) zum Einschrauben von Klemmschrauben (31) aufweisen.

3. Werkbank nach Anspruch 2, dadurch gekennzeichent, dass der Support (30) mit ein- oder beidendig der senkrechten Aufspannflächen (28) angebrachten Augen (32) versehen ist, an welchen mittels in waagrechter Achse (x) verlaufenden Bohrungen bzw. Gewindebohrungen (33) auf Bolzen (34) gelagerte, in vertikaler Ebene bewegliche, als Endanschläge oder Halterungen benutzbare, prismenartige Stangen (35) anbringbar sind.

4. Werkbank nach Anspruch 3, dadurch gekennzeichnet, dass an jeder prismenartigen Stange (35) teleskopartig längsverschiebbar oder mittels eines Gelenks (37) um eine vertikale Achse (y) schwenkbar ein Montagearm (36) befestigt ist, der mit Festspann- und Klemmvorrichtungen für Werkstücke versehen ist, welche in der jeweils gewünschten und mittels einer Feststellvorrichtung fixierbaren Stellung des Montagearms (36) einsetzbar sind.

5. Werkbank nach Anspruch 4, dadurch gekennzeichnet, dass am Montagearm (36) ein C-förmiges Profilstück (38) befestigt ist, in dessen T-förmiger Nut (42) Kopfschrauben (39) oder Bolzen verschiebbar und fixierbar sind, welche zum Anschrauben von Spann- oder Befestigungsmitteln dienen.

6. Werkbank nach Anspruch 5, dadurch gekennzeichnet, dass mittels Kopfschrauben (39) ein Winkel- oder T-Profilstück (45) mit dem C-förmigen Profilstück (38) in einer vorgewählten Position verschraubt ist.

7. Werkbank nach Anspruch 6, dadurch gekennzeichnet, dass das Winkel- oder T-Profilstück (45) mit den Trägerflanschen (17) des ersten Längsflansches (14) mittels Verschraubungen (43) verbindbar ist, deren Schraubenköpfe in der Nut (16) zwischen den beiden Trägerflanschen (17) ihr Widerlager finden.

8. Werkbank nach Anspruch 1, dadurch gekennzeichnet, dass jeder Längsflansch (14, 20) aus zwei parallel zueinander angeordneten Doppel-T-Trägern (15) besteht, deren waagrechtliegende Trägerflansche (17) voneinander um einen Betrag, der um ein geringes grösser ist als der Durchmesser (d) eines Gewindebolzen, beabstandet sind.

9. Werkbank nach Anspruch 8, dadurch gekennzeichnet, dass in dem von den Doppel-T-Trägern (15) nahezu umschlossenen Raum (Z) ein Vierkantrohr (21) mittig auf die auf den Quertraversen (10) aufliegenden Trägerflansche der DoppelT-Träger (15) aufgeschweisst ist, das als Schieberführungshülse (21a) für eine innengeführte Vierkantstange (22) dient.

10. Werkbank nach Anspruch 9, dadurch gekennzeichnet, dass ein- oder beidendig in den Vierkantrohren (21) beider Längsflansche (14, 20) Vierkantstangen (22) längsverschieblich geführt sind, wobei an deren aus den Längsflanschen (14, 20) herausragenden Enden Quer-Auflageflächen (23) anbringbar sind.

11. Werkbank nach Anspruch 10, dadurch gekennzeichnet, dass an einer oder an beiden Aussenseiten der Längsflansche (14, 20) in dem U-förmigen, von den Trägerflanschen (17) und den Trägerstegen (18) gebildeten Räumen C-förmige Profilstangen (25) eingeschweisst sind.

12. Werkbank nach einem der vorangehenden Ansprüche, dadurch gekennzeichnet, dass der in Querrichtung verschiebbar parallelgeführte Längsflansch (20) auf den Quertraversen (10) aufliegend und mittels in diesen angebrachten Nuten (49) durch Gleit- oder Wälzkörper-Führungsmittel formschlüssig geführt ist.

13. Werkbank nach einem der vorangehenden Ansprüche, dadurch gekennzeichnet, dass die Quertraversen (10) bündig mit den Aussenseiten der Beine (9) abschliessen und an den Aussenseiten der Beine (9) je ein rechtwinkliges Winkelteil (67) lösbar anbringbar ist, dessen freier Winkelschenkel (68) die Quertraverse (10) samt Führungsnut (49) fortsetzt.

14. Werkbank nach Anspruch 13, dadurch gekennzeichnet, dass die beiden Winkelschenkel des Winkelteils (67) entweder starr oder um eine Achse (a) um 90° schwenkbar miteinander verbunden sind.

15. Werkbank nach einem der vorangehenden Ansprüche, dadurch gekennzeichnet, dass an den seitlichen Innenflächen der Längsflansche (14, 20) und/oder der Quertraversen (10) und/oder der die Quertraversen (10) fortsetzenden Winkelschenkel (68) eine Masseinteilung vorgesehen ist.

16. Werkbank nach einem der vorangehenden Ansprüche, dadurch gekennzeichnet, dass beidendig am Rahmengestell (R) im Bereich der Beine (9) parallel zu den Quertraversen (10) verlaufende Querstangen (55) befestigt sind, und dass der auf den Quertraversen (10) aufliegende, in Querrichtung und parallel zu dem feststehenden, ersten Längsflansch (14) verschiebbare, zweite Längsflansch (20) beidendig mit wenigstens einer einen Auflagedruck auf die Querstangen (55) ausübenden Treibrolle (56) versehen ist, die beide auf einer beidendig unterhalb des Längsflansches (20) an diesem drehbar gelagerten und mit einem Handrad (58) ausgerüsteten Königswelle (57) befestigt sind.

17. Werkbank nach Anspruch 16, dadurch gekennzeichnet, dass die Querstangen (55) Zahnstangen sind und die Treibrollen (56) in diese eingreifende Verzahnungen aufweisen.

18. Werkbank nach einem der Ansprüche 1 - 15, dadurch gekennzeichnet, dass beidendig im Bereich des Rahmengestells (R) und parallel zu den Quertraversen (10) verlaufend Gewindespindeln (60) drehbar gelagert und von Hand oder motorisch antreibbar sind, welche in Gewindemuttern (61) eingreifen, die an einem der verschiebbaren Längsflansche (14, 20) befestigt sind.

19. Werkbank nach einem oder mehreren der vorangehenden Ansprüche, dadurch gekennzeichnet, dass die vertikalen Anschlagflächen (47), und/oder die vertikalen Flächenteile der Montagearme (36) mit in Aufnahmenuten eingesetzten und befestigten Permanent- oder Elektromagneten versehen sind.

## Claims

1. Work bench, in particular for welding and structural steel work comprising a frame (R) of at least four legs (9) and at least of two each transverse beams (10) and longitudinal flanges (14, 20) showing, in longitudinal direction, at least one guiding groove (16), one flange being firmly mounted onto the transverse beams and the other being displaceable in parallel direction,
characterized in
that at least one guiding bar (24) of prismatic cross-section has been provided, rigidly linked to the frame (R) or to either longitudinal flange (14, 20) and running parallel to either longitudinal flange (14, 20) and on which at least one support (30), longitudinally displaceable with or without any motor drive, which can be fitted with fixing and clamping elements for holding tools, stops or similar accessory implements, and that the bearing surface for pieces to be worked on the working surface formed by the top sides of the two longitudinal flanges (14, 20) is extensible by push-in, pull-out and/or detachable add-on components (22, 23, 67).

2. Work bench according to claim 1, characterized in that each support (30), longitudinally shiftable on the guiding bar (24), has been provided with at least one C-profile (26), open towards the top, to receive cap screws or bolts (31), as well as with a stop face (47) showing towards the interior and with a horizontal and a vertical clamping face (27, 28) having tapped holes (29) to hold attachment screws (31).

3. Work bench according to claim 2, characterized in that the support (30) has been provided with eyes (32), attached to one or both ends of the vertical clamping faces (28), at which, using bores or tap holes (33) arranged in the horizontal axis (x), prismatic bars (35) can be fitted, lodged on bolts (34), movable within the vertical plane and usable as limit stops or fixing devices.

4. Work bench according to claim 3, characterized in that on each prismatic bar (35), a mounting arm (36), longitudinally shiftable, telescopic or pivoting around a vertical axis (y) by means of a link (37), has been fixed, provided with fixing and clamping devices for workpieces, usable in the desired position of the mounting arm (36) which can be fixed by a locking device.

5. Work bench according to claim 4, characterized in that, on the mounting arm (36), a C-profile (38) has been fixed, and in its T-shaped groove (42), cap screws (39) or bolts can be shifted and fastened to hold clamping or fixing elements.

6. Work bench according to claim 5, characterized in that, by means of cap screws (39), an angular part or T-profile (45) has, in a preselected position, been screwed onto the C -profile (38).

7. Work bench according to claim 6, characterized in that the angular part or T-profile (45) is attachable to the beam flanges (17) of the first longitudinal flange (14) using screwed connections (43) of which the screw caps are buttressed by the two beam flanges (17).

8. Work bench according to claim 1, characterized in that each longitudinal flange (14, 20) consists of two I-beams (15), arranged parallel to each other, of which the horizontal beam flanges (17) show a space which is somewhat greater than the diameter (d) of a threaded bolt.

9. Work bench according to claim 8, characterized in that within the space (Z), almost enclosed by the I-beams (15), a square tube (21) has centrically been welded onto the flanges of the I-beams (15) resting on the transverse beams (10), said tube serving as a slide guiding bush (21a) for an inside-guided square bar (22).

10. Work bench according to claim 9, characterized in that at one or both ends, within the square tubes (21) of the two longitudinal flanges (14, 20), square bars (22) are guided, longitudinally shiftable, and at the ends of these bars, projecting from the longitudinal flanges (14, 20), transversal bearing surfaces (23) can be provided.

11. Work bench according to claim 10, characterized in that at one or both outsides of the longitudinal flanges (14, 20), bars of C -profiles (25) have been welded-on within the U-shaped space formed by the beam flanges (17) and the beam webs (18).

12. Work bench according to one of the preceding claims, characterized in that the longitudinal flange (20), crosswise shiftable and parallel guided, which is supported by the transverse beams (10) and positively guided by means of grooves (49) made in the latter and by slide- or roller-type guiding elements.

13. Work bench according to one of the preceding claims, characterized in that the transverse beams (10) are flush with the outsides of the legs (9) and, further, that to the outsides of the legs (9), one each right-angled component (67) can detachably be fitted of which the free side (68) extends the transverse beam (10) with guiding groove (49).

14. Work bench according to claim 13, characterized in that both sides of the right-angled component (67) have been linked one to the other rigidly or slewably by 90° around an axis (a).

15. Work bench according to one of the preceding claims, characterized in that a scale has been provided on the lateral inner faces of the longitudinal flanges (14, 20) and/or of the transverse beams (10) and/or of the sides (68) extending the transverse beams (10).

16. Work bench according to one of the preceding claims, characterized in that at both ends of the frame (R), near the legs (9), crossbars (55) running parallel to the transverse beams (10) have been fixed and that the second longitudinal flange (20), resting on the transverse beams (10) and shiftable crosswise and parallel to the stationary first longitudinal flange (14), has at both ends been provided with at least one driving pulley (56) to transmit a bearing pressure to the crossbars (55), and these two pulleys (56) have been fixed to a shaft (57), located below the longitudinal flange (20), rotatably lodged thereon at both ends and fitted with a handwheel (58).

17. Work bench according to claim 16, characterized in that the crossbars (55) represent racks, and the driving pulleys (56) show teeth meshing said racks.

18. Work bench according to one of the claims 1 to 15, characterized in that at both ends, within the frame (R) and parallel to the transverse beams (10), threaded spindles (60) have rotatably been lodged and can be driven by hand or by motor, said spindles (60) engaging tapped nuts (61) fixed to one of the shiftable longitudinal flanges (14, 20).

19. Work bench according to one or more of the preceding claims, characterized in that the vertical stop faces (47) and/or the vertical face parts of the mounting arms (36) have been fitted with permanent magnets or electromagnets installed and fixed in location notches.

## Revendications

1. Etabli, spécialement pour travaux de soudage et de constructions en acier, avec un bâti (R), constitué par au moins quatre montants (9) et au moins chaque fois deux traverses transversales (10) et brides ou longereaux (14, 20) longitudinales, ces dernières ayant au moins une rainure de guidage (16) en longueur et dont une est fixement montée sur les traverses transversales et l'autre étant coulissante parallèlement,
caractérisé en ce que,
il est prévu, qu'au moins une barre conductrice reliée fixement avec le bati (R) ou une des brides longitudinales (14, 20) parallèlement à la barre de guidage (24) avec une section prismatique à laquelle est logé au moins un support décalable (30) en longueur avec des dispositifs de blocage et de serrage pour la fixation d'outils, de butées et d' autres moyens auxiliaires avec ou sans commande motorisée décalable en longueur, et, que la surface porteuse pour la surface d'usinage produite par les côtés supérieurs des deux brides ou longereaux longitudinales (14, 20) pour l'usinage des pièces de main-d'oeuvre soit extensible au moyen ajustées détachables (22, 23, 67) et/ou extensibles et retractiles.

2. Etabli selon revendication 1, caractérisé en ce que chaque support (30) décalable en longueur à la barre conductrice (24) est muni au moins d'une barre profilée en forme de "C" (26) pour la réception de vis à tête ou de boulons (31) et d'une surface d'arrête (47) dirigée vers l'intérieur ainsi que d'une plaque de fixation horizontale et verticalè (27, 28), ayant des tarauds (29) pour le vissage de serrage (31).

3. Etabli selon revendication 2 caractérisé en ce que le support (30) est muni d'oeillards (32) se trouvant à chaque aboutissement de la plaque de fixation (28) sur lesquels on peut monter au moyen de vissages resp. de taraudages (33) menés en axe horizontal (X), logés sur des boulons (34) mobiles en surface verticale, employables comme butées, des barres du genre prismatique (35).

4. Etabli selon revendication 3, caractérisé en ce q'un bras de montage (36) est fixé à chaque barre du genre prismatique (35) de genre télescopique décalable en longueur ou articulé au moyen d'une articulation autour d'un axe vertical (Y), muni de dispositifs de blocage et de serrage pour les pièces d'oeuvre pouvant être employés pour chaque position désirée selon le cas, ainsi qu'au moyen d'un dispositif d'arrêt fixable.

5. Etabli selon revendication 4, caractérisé en ce qu'il est fixée au bras de montage (36) une pièces profilée en forme de "C" (38) et que dans la rainure en forme de "T" (42) de cette dernière sont présentes des vis à tête (39) ou des boulons de manière ajustable et décalable servant au vissage des dispositifs de blocage et de serrage.

6. Etabli selon revendication 5, caractérisé en ce qu'une pièce angulaire-ou une pièce profilée-en forme de "T" (45) est serrée par vissage avec la pièce profilée en forme de "C" (38) dans une position préconçue.

7. Etabli selon revendication 6, caractérisé en ce que la pièce d'angle - ou la pièce profilée en forme de de "T" (45) est ajustable avec les brides ∼porteuses (17) de la première bride longitudinale (14) au moyen de boulonage (43) dont les têtes de vis dans les rainures (16) trouvent leurs butées entre les deux brides porteuses (17).

8. Etabli selon revendication caractérisé en ce que chaque bride longitudinale (14, 20) est composée de double -porteurs en forme de "T" (15) montés parallèlement l'un vers l'autre, dont la bride de support (17) couchée horizontalement dont la valeur diffère faiblement en grosseur du diamètre (d) d'un boulon fileté.

9. Etabli selon revendication 8, caractérisé en ce qu'un tube carré (21) est soudé au milieu sur les traverses transversales (10) logées sur les-brides porteuses des supports doubles "T" (15) dans l'espace (Z) presque close par les supports doubles "T" (7). Le tube carré sert de douille de guidage (21a) pour une barre carrée conduite intérieurement (22).

10. Etabli selon revendication 9, caractérisé en ce que des barres carrées (22) décalables sont ajustées en longueur aux aboutissements de début ou terminaux dans les tubes carrées (21) des deux brides longitudinales (14, 20) présentant ainsi la possibilté de fixer aux bouts saillants de ces derniers des surfaces d'appui (23).

11. Etabli selon revendication 10, caractérisé en ce que des barres profilées en forme de "C" (25) sont soudées à la surface extérieure d'une des deux brides longitudinales (14, 20) dans les espaces formées par les brides de support (17) et les âmes de poutré (25).

12. Etabli selon l'une des revendication précédentes, caractérisé en ce que la bride longitudinale (20) décalable en sens transversal, conduite parallèlement, logée sur les, traverses (10) et conduite par commande mécanique au moyen de rainures de guidage roulantes ou glissantes (49) des dites traverses transversales (10).

13. Etabli selon l'une des revendications précédentes, caractérisé en ce que les traverses transversales (1O) s'arrêtent avec precision sur les côtés extérieurs des montants (9) et qu'une pièce à angle droit (67) soit montée de façon détachable, dont l'aile d'angle libre (68) continue la traverse transversale (10) en même temps, que la rainure de guidage (49).

14. Etabli selon revendication 13, caractérisé en ce que les deux ailes d'angle de la pièce angulaire (67) soient reliées ensemble de manière fixe ou articulées 90° autour d'un axe (a).

15. Etabli selon l'une des revendications précédentes caractérisé en ce qu'une échelle de mesure soit prévue sur la surface intérieure des côtés des brides longitudinales (14, 20) et/ou des traverses transversales (10) et/ou de l'aile d'angle continuant les traverses transversales (10).

16. Etabli selon une des revendications précédentes, caractérisé en ce qu'aux deux bouts du bâti (R) dans le domaine des montants (9) soient montées des barres transversales (55) conduites parallèlement sur les traverses transversales (10) et, que la deuxième bride longitudinale (20) logée sur les traverses transversales (10) en direction transversale et parallèlement à la première bride longitudinale (14) et décalable soit munie aux deux aboutissements au moins d'une poulie motrice (56) exerçant une pression d'appui sur les barres transversales (55), les deux étant ajustées sur un pivot central (57) se trouvant aux deux aboutissements sous la bride longitudinale (20), logées mobilement à cette dernière et munies d'une roue manuelle.

17. Etabli selon l'une des revendication 16, caractérisé en ce que les barres de traverses (55) sont des crémaillères et que les poulies motrices (56) sont munies d' engrenages s'engrenant dans ces dernières.

18. Etabli selon l'une des revendications 1 - 15, caractérisé en ce que des broches filetées (60) soient logées de manière articulée aux deux aboutissements dans le domaine du bâti (R), menées parallèlement aux traverses transversales (10) et qu'elles soient commandées manuellement ou par moteur, s'engrenant dans des écrous de filetage (61) montés sur les brides longitudinales (14, 20).

19. Etabli selon l'une ou plusieurs revendications précédentes, caractérisé en ce que les surfaces d'arrête verticales (47) et/ou les parties de surfaces verticales des bras de montage (36) sont munies de magnetos électriques ou permanentes introdiuites et ajustées dans les rainures de réception.
